# EUROPEAN PATENT APPLICATION

(11) **EP 4 790 377 A1**
(43) Date of publication of application: **12.08.2026**
(21) Application number: 24876193.4
(22) Date of filing: 02.08.2024
(51) Int. Cl.: G01M 3/40, H02H 9/04

(54) **LIQUID LEAKAGE DETECTION CIRCUIT, SYSTEM, METHOD AND APPARATUS, DEVICE, AND BATTERY MANAGEMENT SYSTEM**

(30) Priority: 09.10.2023 CN 202311295766
(71) Applicant: Contemporary Amperex Technology Co., Limited, Ningde, Fujian 352100 (CN)
(72) Inventor: CHEN, Hui, Ningde, Fujian 352100 (CN); XIA, Zhangle, Ningde, Fujian 352100 (CN); LI, Weiqiang, Ningde, Fujian 352100 (CN); YE, Fuming, Ningde, Fujian 352100 (CN)
(74) Representative: Gong, Jinping
(86) International application number: PCT/CN2024/109603
(87) International publication number: WO 2025/077373

(57) **Abstract**

A liquid leakage detection circuit (100), comprising: a sampling circuit (110), the sampling circuit (110) having an output end connected to an input end of an excitation source circuit (120) and used for sending a control signal to the excitation source circuit (120); and the excitation source circuit (120), the excitation source circuit (120) having an output end connected to a signal detection circuit (130) and used for generating an excitation signal on the basis of the control signal and sending the excitation signal to the signal detection circuit (130), and the excitation signal being a periodic pulse signal. The sampling circuit (110) is further used for collecting a liquid leakage state signal of a battery pack (200) in the signal detection circuit (130), wherein the liquid leakage state signal is generated in response to the excitation signal, so that liquid leakage detection for the battery pack can be achieved. The present invention further relates to a liquid leakage detection system, method and apparatus, a device, and a battery management system.

## Description

### CROSS-REFERENCE TO RELATED APPLICATION

The present application claims priority to Chinese Patent Application No. 202311295766.2 filed on October 9, 2023 and entitled "LIQUID LEAKAGE DETECTION CIRCUIT, SYSTEM, METHOD AND APPARATUS, DEVICE, AND BATTERY MANAGEMENT SYSTEM", the content of which is incorporated herein by reference in its entirety.

### TECHNICAL FIELD

The present application relates to the technical field of batteries, and in particular, to a liquid leakage detection circuit, system, method and apparatus, a device, and a battery management system.

### BACKGROUND

If coolant leakage occurs in a battery pack, accidents such as a short circuit, damage, and explosion of the battery may occur. To improve the reliability of the battery pack, it is necessary to detect whether the battery pack has liquid leakage.

Therefore, a solution for performing liquid leakage detection on the battery pack is needed.

### SUMMARY

The present application provides a liquid leakage detection circuit, system, method and apparatus, a device, and a battery management system, which can perform liquid leakage detection on a battery pack.

In a first aspect, the present application provides a liquid leakage detection circuit, which includes: a sampling circuit, where an output end of the sampling circuit is connected to an input end of an excitation source circuit, and is configured to send a control signal to the excitation source circuit; and the excitation source circuit, where an output end of the excitation source circuit is connected to a signal detection circuit, and is configured to generate an excitation signal based on the control signal, and send the excitation signal to the signal detection circuit, and the excitation signal is a periodic pulse signal; where the sampling circuit is further configured to collect a liquid leakage state signal of a battery pack in the signal detection circuit, and the liquid leakage state signal is generated in response to the excitation signal.

Thus, by disposing the sampling circuit to send the control signal to the excitation source circuit, the excitation source circuit is enabled to generate the excitation signal based on the control signal and send the excitation signal to the signal detection circuit. The sampling circuit then collects the liquid leakage state signal of the battery pack in the signal detection circuit, thereby realizing the detection of whether the battery pack has liquid leakage.

In some embodiments, the signal detection circuit includes: a signal detection end, connected to the output end of the excitation source circuit and an input end of a resistance-capacitance charging and discharging circuit, separately, and configured to collect the liquid leakage state signal of the battery pack; and the resistance-capacitance charging and discharging circuit, where an output end of the resistance-capacitance charging and discharging circuit is connected to an input end of the sampling circuit; and the sampling circuit is further configured to collect a first voltage between a capacitor and a resistor in the resistance-capacitance charging and discharging circuit.

In this way, since the capacitance-resistance charging and discharging circuit is relatively simple, adoption of the capacitance-resistance charging and discharging circuit may reduce the complexity of the liquid leakage detection circuit and ensure the stable transmission of the liquid leakage state signal at the same time.

In some embodiments, the liquid leakage detection circuit further includes: a voltage isolation module, where an input end of the voltage isolation module is connected to the signal detection end, and an output end of the voltage isolation module is connected to the input end of the resistance-capacitance charging and discharging circuit.

In this way, by connecting the voltage isolation module in series between the signal detection end and the resistance-capacitance (RC) charging and discharging circuit, when the battery pack has liquid leakage, the situation that a high voltage of a high-voltage system is injected into the liquid leakage detection circuit through the signal detection end may be improved. This reduces the possibility of causing circuit damage, and enables the liquid leakage detection circuit to normally determine whether the battery pack has liquid leakage, thereby facilitating a battery management system (BMS) to be capable of finding and taking corresponding measures in time when the battery pack has liquid leakage, improving the reliability of the battery pack.

In some embodiments, the voltage isolation module includes: a first capacitor, where a first end of the first capacitor is connected to the signal detection end, and a second end of the first capacitor is connected to the input end of the resistance-capacitance charging and discharging circuit.

In this way, isolating the high voltage of the high-voltage system in the battery pack through a simple capacitor may reduce the complexity of the liquid leakage detection circuit.

In some embodiments, the liquid leakage detection circuit includes: a follower, where an input end of the follower is connected to the output end of the resistance-capacitance charging and discharging circuit, and an output end of the follower is connected to the input end of the sampling circuit.

In this way, by increasing an input impedance through the follower, the RC charging and discharging circuit may be isolated from a circuit connected to the other end of the follower, so that a voltage in the circuit at the other end is prevented from affecting a voltage of the RC charging and discharging circuit. As a result, the first voltage collected by the sampling circuit from the PC charging and discharging circuit cannot accurately reflect whether the battery pack has liquid leakage.

In some embodiments, the liquid leakage detection circuit further includes: a clamp protection circuit, where an input end of the clamp protection circuit is connected to the output end of the resistance-capacitance charging and discharging circuit, an output end of the clamp protection circuit is connected to the input end of the follower, and the clamp protection circuit is configured to clamp the first voltage within a preset voltage range.

In this way, by clamping the first voltage within the preset voltage range through the clamp protection circuit, the follower may be prevented from being damaged due to overvoltage caused by external surge voltage.

In some embodiments, the clamp protection circuit includes: a first unidirectional conduction module, where a first end of the first unidirectional conduction module is connected to the output end of the resistance-capacitance charging and discharging circuit, the input end of the follower, and a first end of the second unidirectional conduction module, separately, and a second end of the first unidirectional conduction module is connected to a power supply, and is configured to be conducted toward a direction of the power supply in the case that the first voltage is greater than a voltage of the power supply; and the second unidirectional conduction module, where the first end of the second unidirectional conduction module is further connected to the output end of the resistance-capacitance charging and discharging circuit and the input end of the follower, separately, and a second end of the second unidirectional conduction module is grounded, and is configured to be conducted toward a ground direction in the case that the first voltage is less than a ground voltage.

In this way, the first voltage may be clamped between the power supply voltage and the ground voltage through the first unidirectional conduction module and the second unidirectional conduction module, so that the follower may be prevented from being damaged due to overvoltage caused by external surge voltage.

In some embodiments, the liquid leakage detection circuit further includes: a filter circuit, where an input end of the filter circuit is connected to the output end of the follower, an output end of the filter circuit is connected to the input end of the sampling circuit, and the filter circuit is configured to filter out noise in the first voltage.

In this way, by disposing the filter circuit to filter out the noise in the first voltage, the first voltage received by a sampling module may be made more stable, thereby facilitating more accurate determination of whether the battery pack has liquid leakage.

In some embodiments, the filter circuit includes: a first resistor, where a first end of the first resistor is connected to the output end of the follower, and a second end of the first resistor is connected to a first end of a second capacitor and the input end of the sampling circuit, separately; and the second capacitor, where the first end of the second capacitor is further connected to the input end of the sampling circuit, and a second end of the second capacitor is grounded.

In this way, the filter circuit includes a resistor and a capacitor, and adoption of the RC filter circuit further reduces the complexity of the liquid leakage detection circuit.

In some embodiments, the excitation source circuit includes: a transistor, where a control end of the transistor is connected to the output end of the sampling circuit, a first end of the transistor is connected to a first end of a second resistor and the signal detection circuit, separately, and a second end of the transistor is grounded; the second resistor, where the first end of the second resistor is further connected to the signal detection circuit, and a second end of the second resistor is connected to a first end of a third unidirectional conduction module; and the third unidirectional conduction module, where a second end of the third unidirectional conduction module is connected to the power supply.

In this way, a periodic excitation signal may be generated through the excitation source circuit, such that the signal detection circuit can periodically collect the liquid leakage state signal of the battery pack, thereby periodically detecting whether the battery pack has liquid leakage.

In some embodiments, the excitation source circuit includes: a sine-cosine reference source, where an input end of the sine-cosine reference source is connected to the output end of the sampling circuit, and an output end of the sine-cosine reference source is connected to the signal detection circuit.

In this way, the periodic excitation signal may be generated through the sine-cosine reference source, such that the signal detection circuit can periodically collect the liquid leakage state signal of the battery pack, thereby periodically detecting whether the battery pack has liquid leakage.

In a second aspect, the present application provides a liquid leakage detection system, which includes: the liquid leakage detection circuit according to any one of the embodiments of the first aspect.

Thus, the liquid leakage detection system includes the liquid leakage detection circuit. In the liquid leakage detection circuit, by disposing the sampling circuit to send the control signal to the excitation source circuit, the excitation source circuit is enabled to generate the excitation signal based on the control signal and send the excitation signal to the signal detection circuit. The sampling circuit then collects the liquid leakage state signal of the battery pack in the signal detection circuit, thereby realizing the detection of whether the battery pack has liquid leakage.

According to a third aspect, the present application provides a battery management system, which includes the liquid leakage detection circuit according to any one of the embodiments of the first aspect.

In a fourth aspect, the present application provides a liquid leakage detection method, which is applied to the liquid leakage detection circuit according to any one of the embodiments of the first aspect. The method includes: collecting, by the sampling circuit, the first voltage; and determining, by the sampling circuit, based on the first voltage, whether the battery pack has liquid leakage.

Thus, the liquid leakage detection circuit may collect the first voltage through the sampling circuit, and determine whether the battery pack has liquid leakage based on the first voltage, and therefore may realize the liquid leakage detection of the battery pack.

In some embodiments, determining, by the sampling circuit, based on the first voltage, whether the battery pack has the liquid leakage includes: determining, by the sampling circuit, that the battery pack does not have the liquid leakage in the case that the first voltage is greater than a first voltage threshold; and determining, by the sampling circuit, that the battery pack has the liquid leakage in the case that the first voltage satisfies a first preset condition.

In this way, whether the battery pack has liquid leakage may be determined accurately based on the first voltage, the first voltage threshold, and the first preset condition.

In some embodiments, collecting, by the sampling circuit, the first voltage includes: collecting, by the sampling circuit, N first voltages in a single detection cycle; determining, by the sampling circuit, that the battery pack does not have the liquid leakage in the case that the first voltage is greater than the first voltage threshold includes: determining, by the sampling circuit, that the battery pack does not have the liquid leakage in the case that a quantity of voltages greater than the first voltage threshold in the N first voltages exceeds P; and determining, by the sampling circuit, that the battery pack has the liquid leakage in the case that the first voltage satisfies the first preset condition includes: determining, by the sampling circuit, that the battery pack has the liquid leakage in the case that a quantity of voltages satisfying the first preset condition in the N first voltages exceeds Q; where the first preset condition is that the first voltage is greater than a second voltage threshold and less than the first voltage threshold, the second voltage threshold is less than the first voltage threshold, and N, P, and Q are all positive integers.

In this way, whether the battery pack has liquid leakage may be determined more accurately based on a plurality of first voltages in the single detection cycle.

In some embodiments, before determining, by the sampling circuit, based on the first voltage, whether the battery pack has the liquid leakage, the method further includes: determining, by the sampling circuit, based on the first voltage, that the liquid leakage detection circuit does not malfunction.

In this way, by predetermining whether the liquid leakage detection circuit malfunctions, the possibility of inaccurate liquid leakage detection results caused by malfunction of the liquid leakage detection circuit may be reduced, and the accuracy of liquid leakage detection may be improved.

In some embodiments, determining, by the sampling circuit, based on the first voltage, that the liquid leakage detection circuit does not malfunction includes: determining, by the sampling circuit, that the liquid leakage detection circuit does not malfunction in the case that the first voltage does not satisfy a second preset condition; where the second preset condition includes: the first voltage being less than the second voltage threshold; and the first voltage being greater than the first voltage threshold.

In this way, whether the liquid leakage detection circuit malfunctions is periodically detected based on the first voltage, so that whether the liquid leakage detection circuit malfunctions may be determined accurately and timely.

In some embodiments, determining, by the sampling circuit, based on the first voltage, that the liquid leakage detection circuit does not malfunction includes: determining, by the sampling circuit, that the liquid leakage detection circuit does not malfunction in the case that the N first voltages do not satisfy a third preset condition; where the third preset condition includes: the N first voltages being all less than the second voltage threshold; and the N first voltages being all greater than a first voltage threshold.

In this way, whether the liquid leakage detection circuit malfunctions may be determined more accurately based on the plurality of first voltages in the single detection cycle.

In a fifth aspect, the present application provides a liquid leakage detection apparatus, which is applied to the liquid leakage detection circuit according to any one of the embodiments of the first aspect. The apparatus includes: a collection module, configured to collect, by the sampling circuit, the first voltage; and a determination module, configured to determine, by the sampling circuit, based on the first voltage, whether the battery pack has liquid leakage.

Thus, the liquid leakage detection circuit may collect the first voltage through the sampling circuit, and determine whether the battery pack has liquid leakage based on the first voltage, and therefore may realize the liquid leakage detection of the battery pack.

According to a sixth aspect, the present application provides an electronic device. The electronic device includes: a processor and a memory storing a computer program instruction;
where the processor, when executing the computer program instruction, implements the liquid leakage detection method according to any one of the embodiments of the fourth aspect.

In a seventh aspect, the present application provides a computer storage medium having a computer program instruction stored thereon, where the computer program instruction, when executed by a processor, causes the processor to implement the liquid leakage detection method according to any one of the embodiments of the fourth aspect.

According to an eighth aspect, an embodiment of the present application provides a computer program product, where an instruction in the computer program product, when executed by a processor of an electronic device, causes the electronic device to perform the liquid leakage detection method according to any one of the embodiments of the fourth aspect.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a first schematic structural diagram of a liquid leakage detection circuit according to some embodiments of the present application;
FIG. 2 is a second schematic structural diagram of a liquid leakage detection circuit according to some embodiments of the present application;
FIG. 3 is a third schematic structural diagram of a liquid leakage detection circuit according to some embodiments of the present application;
FIG. 4 is a fourth schematic structural diagram of a liquid leakage detection circuit according to some embodiments of the present application;
FIG. 5 is a fifth schematic structural diagram of a liquid leakage detection circuit according to some embodiments of the present application;
FIG. 6 is a sixth schematic structural diagram of a liquid leakage detection circuit according to some embodiments of the present application;
FIG. 7 is a seventh schematic structural diagram of a liquid leakage detection circuit according to some embodiments of the present application;
FIG. 8 is an eighth schematic structural diagram of a liquid leakage detection circuit according to some embodiments of the present application;
FIG. 9 is a ninth schematic structural diagram of a liquid leakage detection circuit according to some embodiments of the present application;
FIG. 10 is a tenth schematic structural diagram of a liquid leakage detection circuit according to some embodiments of the present application;
FIG. 11 is an eleventh schematic structural diagram of a liquid leakage detection circuit according to some embodiments of the present application;
FIG. 12 is a twelfth schematic structural diagram of a liquid leakage detection circuit according to some embodiments of the present application;
FIG. 13 is a thirteenth schematic structural diagram of a liquid leakage detection circuit according to some embodiments of the present application;
FIG. 14 is a fourteenth schematic structural diagram of a liquid leakage detection circuit according to some embodiments of the present application;
FIG. 15 is a fifteenth schematic structural diagram of a liquid leakage detection circuit according to some embodiments of the present application;
FIG. 16 is a sixteenth schematic structural diagram of a liquid leakage detection circuit according to some embodiments of the present application;
FIG. 17 is a seventeenth schematic structural diagram of a liquid leakage detection circuit according to some embodiments of the present application;
FIG. 18 is an eighteenth schematic structural diagram of a liquid leakage detection circuit according to some embodiments of the present application;
FIG. 19 is a schematic structural diagram of a liquid leakage detection system according to some embodiments of the present application;
FIG. 20 is a schematic flowchart of a liquid leakage detection method according to some embodiments of the present application;
FIG. 21 is a first schematic diagram of a waveform according to some embodiments of the present application;
FIG. 22 is a second schematic diagram of a waveform according to some embodiments of the present application;
FIG. 23 is a schematic structural diagram of a liquid leakage detection apparatus according to some embodiments of the present application; and
FIG. 24 is a schematic structural diagram of an electronic device according to some embodiments of the present application.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more

(including two) groups, and "plurality of pieces" refers to two or more (including two) pieces.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

Generally, in the technical field of batteries, when a battery pack is used, various aspects of detection and monitoring are required to ensure its normal operation. For example, insulation failure or other abnormal problems may occur when coolant leakage occurs in the battery pack. Therefore, it is necessary to detect whether the battery pack has liquid leakage to improve the reliability of the battery pack.

In view of the above technical problems, the present application provides a liquid leakage detection circuit. By disposing a sampling circuit to send a control signal to an excitation source circuit, the excitation source circuit is enabled to generate an excitation signal based on the control signal and send the excitation signal to a signal detection circuit. The sampling circuit then collects a liquid leakage state signal of a battery pack in the signal detection circuit, thereby realizing detection of whether the battery pack has liquid leakage.

The following describes a liquid leakage detection circuit, system, method and apparatus, a device, and a battery management system according to embodiments of the present application in detail.

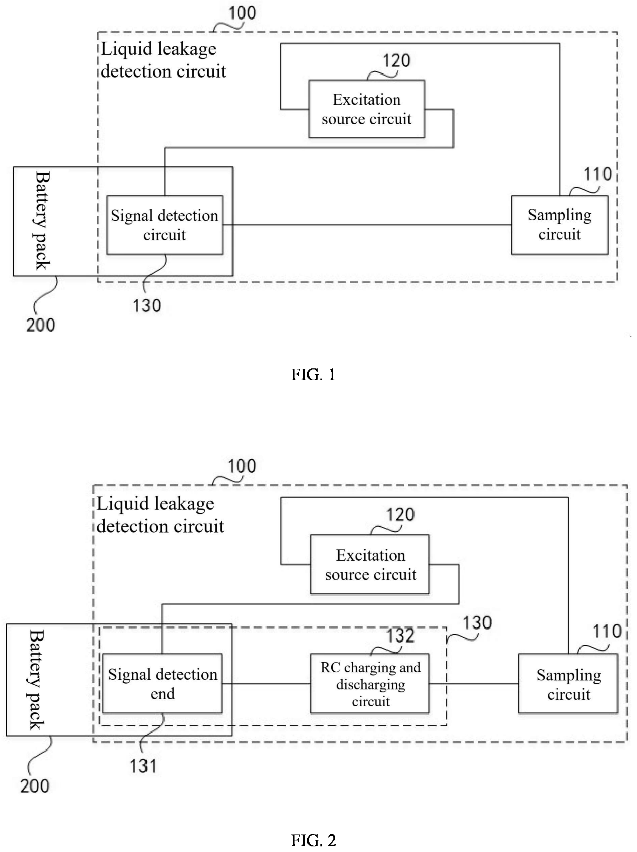

FIG. 1 is a schematic structural diagram of a liquid leakage detection circuit according to some embodiments of the present application. As shown in FIG. 1, the liquid leakage detection circuit 100 may include: a sampling circuit 110, an excitation source circuit 120, and a signal detection circuit 130.

An output end of the sampling circuit 110 is connected to an input end of the excitation source circuit 120, and may be configured to send a control signal to the excitation source circuit 120.

An output end of the excitation source circuit 120 is connected to the signal detection circuit 130, and may be configured to generate an excitation signal based on the control signal and send the excitation signal to the signal detection circuit 130.

The sampling circuit 110 may be further configured to collect a liquid leakage state signal of a battery pack 200 in the signal detection circuit 130.

Here, the liquid leakage state signal may be generated in response to the excitation signal. The liquid leakage state signal may reflect whether the battery pack has liquid leakage. Illustratively, the liquid leakage state signal may be a voltage signal.

The excitation signal may be a periodic pulse signal, and specifically, may be a pulse width modulation (PWM) signal or a sine-cosine signal. Illustratively, the excitation signal may be a voltage signal.

The sampling circuit 110 may be a micro controller unit (MCU).

Specifically, the sampling circuit 110 may send the control signal to the excitation source circuit 120, the excitation source circuit 120 may generate the excitation signal based on the control signal, and send the excitation signal to the signal detection circuit 130, and then the sampling circuit 110 may further collect the liquid leakage state signal of the battery pack 200 in the signal detection circuit 130.

Thus, by disposing the sampling circuit to send the control signal to the excitation source circuit, the excitation source circuit is enabled to generate the excitation signal based on the control signal and send the excitation signal to the signal detection circuit. The sampling circuit then collects the liquid leakage state signal of the battery pack in the signal detection circuit, thereby realizing the detection of whether the battery pack has liquid leakage.

In some embodiments of the present application, as shown in FIG. 2, the signal detection circuit may include: a signal detection end 131 and a resistance-capacitance (RC) charging and discharging circuit 132.

The signal detection end 131 may be connected to the output end of the excitation source circuit 120 and an input end of the RC charging and discharging circuit 132, separately, and may be configured to collect the liquid leakage state signal of the battery pack 200.

An output end of the RC charging and discharging circuit 132 may be connected to an input end of the sampling circuit 110.

The sampling circuit 110 may be further configured to collect a first voltage between a capacitor and a resistor in the RC charging and discharging circuit 132.

Here, the RC charging and discharging circuit 132 may be a circuit including the resistor and the capacitor, and quantities of the capacitors and the resistors in the RC charging and discharging circuit 132 may be set according to actual needs.

The signal detection end 131 may be a liquid leakage sensor. Illustratively, the signal detection end 131 may be a probe.

The signal detection end 131 may include one or more sub-signal detection ends, and a specific quantity may be set according to actual needs.

The excitation signal generated by the excitation source circuit 120 may charge and discharge the capacitor in the RC charging and discharging circuit 132.

Specifically, the signal detection end 131 may collect the liquid leakage state signal of the battery pack 200, the liquid leakage state signal forms the first voltage when passing through the RC charging and discharging circuit 132, and the sampling circuit 110 may collect the first voltage in the RC charging and discharging circuit 132, thereby detecting a liquid leakage state. Optionally, the first voltage may be a voltage between the capacitor and the resistor in the RC charging and discharging circuit 132.

In this way, since the RC charging and discharging circuit is relatively simple, adoption of the RC charging and discharging circuit may reduce the complexity of the liquid leakage detection circuit and ensure the stable transmission of the liquid leakage state signal at the same time.

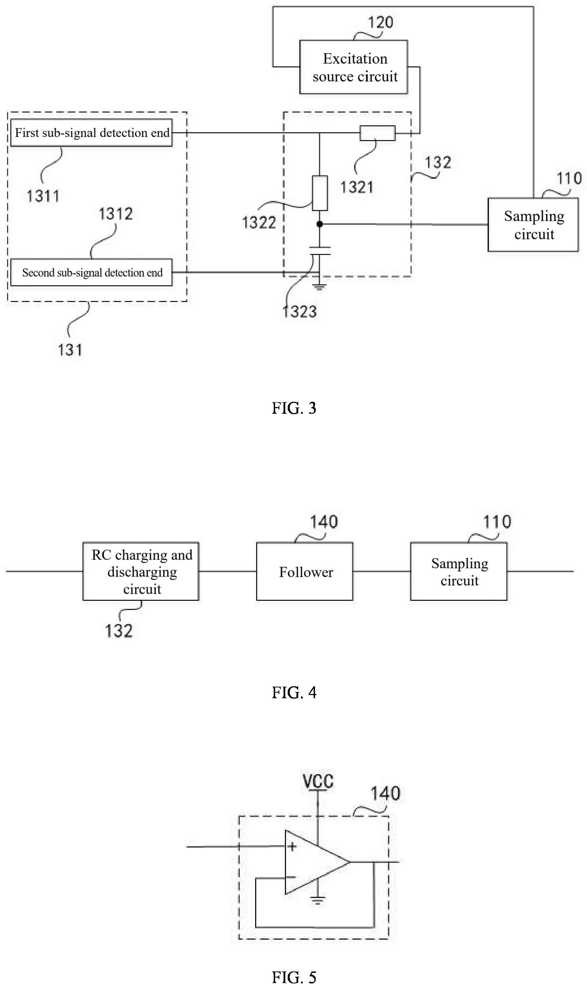

In some embodiments of the present application, as shown in FIG. 3, the RC charging and discharging circuit 132 may include a third resistor 1321, a fourth resistor 1322, and a third capacitor 1323. The signal detection end 131 may include a first sub-signal detection end 1311 and a second sub-signal detection end 1312.

A first end of the third resistor 1321 is connected to the output end of the excitation source circuit 120, and a second end of the third resistor 1321 is connected to the first sub-signal detection end 1311 and a first end of the fourth resistor 1322, separately.

A second end of the fourth resistor 1322 is connected to a first end of the third capacitor 1323 and the input end of the sampling circuit 110, separately.

The first end of the third capacitor 1323 is further connected to the input end of the sampling circuit 110, and a second end of the third capacitor 1323 is connected to the second sub-signal detection end 1312 and grounded.

In some embodiments of the present application, as shown in FIG. 4, the liquid leakage detection circuit may further include a follower 140.

An input end of the follower 140 is connected to the output end of the RC charging and discharging circuit 132, and an output end of the follower 140 is connected to the input end of the sampling circuit 110.

Here, the follower 140 may be configured to increase an input impedance.

Specifically, the follower 140 may transmit the first voltage collected from the RC charging and discharging circuit 132 to the sampling circuit 110.

Illustratively, the follower 140 may be as shown in FIG. 5.

In this way, by increasing an input impedance through the follower, the RC charging and discharging circuit may be isolated from a circuit connected to the other end of the follower, so that a voltage in the circuit at the other end is prevented from affecting a voltage of the RC charging and discharging circuit. As a result, the first voltage collected by the sampling circuit from the PC charging and discharging circuit cannot accurately reflect whether the battery pack has liquid leakage.

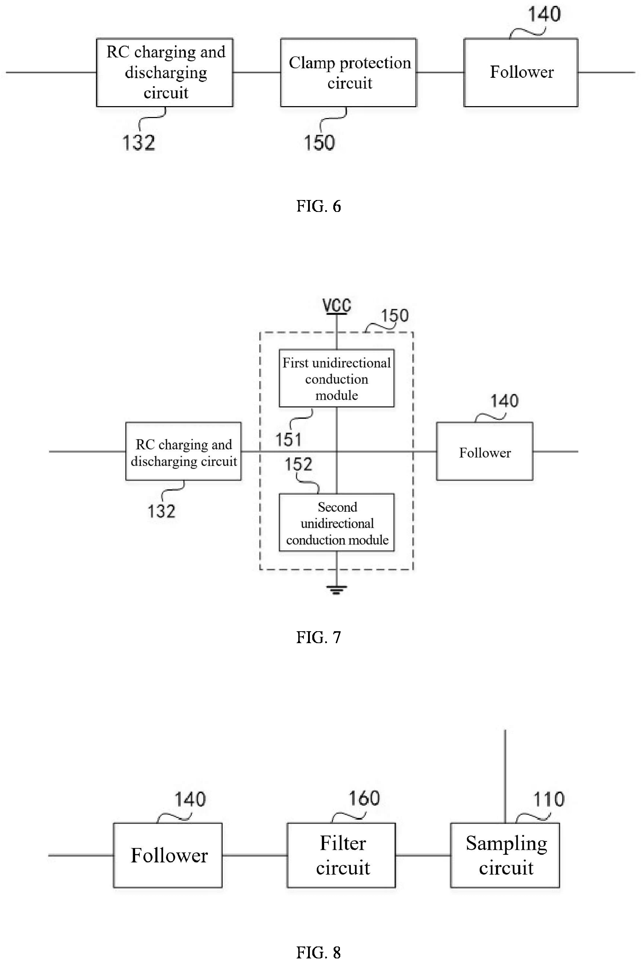

In some embodiments of the present application, as shown in FIG. 6, the liquid leakage detection circuit 100 may further include a clamp protection circuit 150.

An input end of the clamp protection circuit 150 is connected to the output end of the RC charging and discharging circuit 132, an output end of the clamp protection circuit 150 is connected to the input end of the follower 140, and the clamp protection circuit may be configured to clamp the first voltage within a preset voltage range.

Here, the preset voltage range may not exceed a withstand voltage of the follower 140.

Specifically, the clamp protection circuit 150 may clamp the first voltage collected from the RC charging and discharging circuit 132 within the preset voltage range, and then send the first voltage clamped within the preset voltage range to the follower 140.

In this way, by clamping the first voltage within the preset voltage range through the clamp protection circuit, the follower may be prevented from being damaged due to overvoltage caused by external surge voltage.

In some embodiments of the present application, as shown in FIG. 7, the clamp protection circuit 150 may include a first unidirectional conduction module 151 and a second unidirectional conduction module 152.

A first end of the first unidirectional conduction module 151 is connected to the output end of the RC charging and discharging circuit 132, the input end of the follower 140, and a first end of the second unidirectional conduction module 152, separately, and a second end of the first unidirectional conduction module 151 is connected to a power supply, and is configured to be conducted toward a direction of the power supply in the case that a first voltage is greater than a voltage of the power supply.

The first end of the second unidirectional conduction module 152 is further connected to the output end of the RC charging and discharging circuit 132 and the input end of the follower 140, separately, and a second end of the second unidirectional conduction module 152 is grounded, and is configured to be conducted toward a ground direction in the case that the first voltage is less than a ground voltage.

Herein, both the first unidirectional conduction module 151 and the second unidirectional conduction module 152 may include diodes.

The first end of the first unidirectional conduction module 151 may be an anode of a first diode, and the second end of the first unidirectional conduction module 151 may be a cathode of the first diode.

The first end of the second unidirectional conduction module 152 may be a cathode of a second diode, and the second end of the second unidirectional conduction module 152 may be an anode of the second diode.

Specifically, the anode of the first diode is connected to the output end of the RC charging and discharging circuit 132, the input end of the follower 140, and the cathode of the second diode, separately, and the cathode of the first diode is connected to the power supply.

The cathode of the second diode is further connected to the output end of the RC charging and discharging circuit 132 and the input end of the follower 140, separately, and the anode of the second diode is grounded.

The first diode may be conducted toward the direction of the power supply in the case that the first voltage is greater than the voltage of the power supply; and the second diode may be conducted toward the ground direction in the case that the first voltage is less than the ground voltage, such that the first voltage may be clamped between the power supply voltage and the ground voltage. The preset voltage range may be set by setting the voltage of the power supply and the ground voltage.

In this way, the first voltage may be clamped between the power supply voltage and the ground voltage through the first unidirectional conduction module and the second unidirectional conduction module, so that the follower may be prevented from being damaged due to overvoltage caused by external surge voltage.

In some embodiments of the present application, as shown in FIG. 8, the liquid leakage detection circuit may further include a filter circuit 160.

An input end of the filter circuit 160 is connected to the output end of the follower 140, an output end of the filter circuit 160 is connected to the input end of the sampling circuit 110, and the filter circuit may be configured to filter out noise in the first voltage.

Specifically, the filter circuit 160 may receive the first voltage sent by the follower 140, filter out the noise in the first voltage, and send the first voltage with the noise filtered out to the sampling circuit 110.

In this way, by disposing the filter circuit to filter out the noise in the first voltage, the first voltage received by the sampling circuit may be made more stable, thereby facilitating more accurate determination of whether the battery pack has liquid leakage.

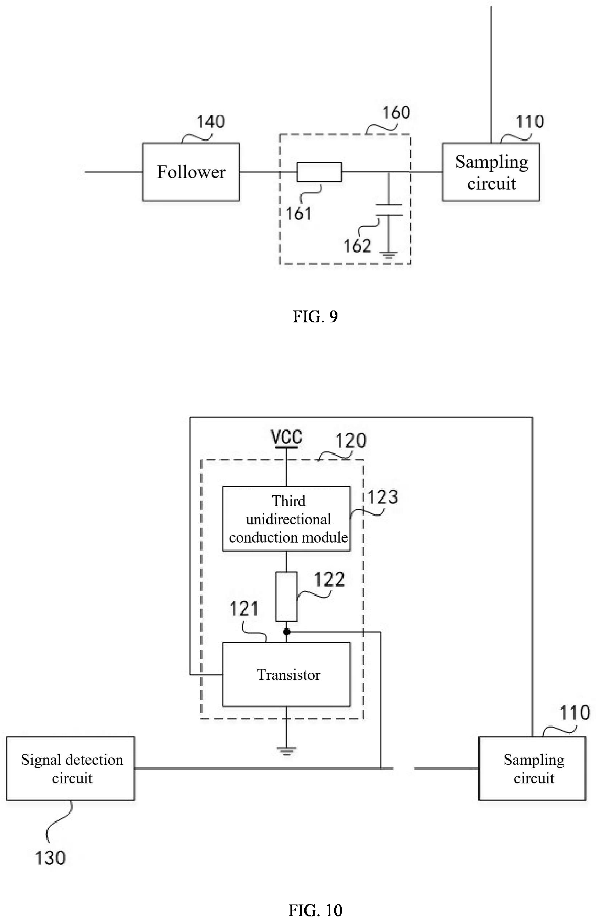

In some embodiments of the present application, as shown in FIG. 9, the filter circuit 160 may include a first resistor 161 and a second capacitor 162.

A first end of the first resistor 161 is connected to the output end of the follower 140, and a second end of the first resistor 161 is connected to a first end of the second capacitor 162 and the input end of the sampling circuit 110, separately.

The first end of the second capacitor 162 is further connected to the input end of the sampling circuit 110, and a second end of the second capacitor 162 is grounded.

A resistance value of the first resistor 161 may be set according to actual needs.

A capacitance value of the second capacitor 162 may be set according to actual needs.

In this way, the filter circuit includes a resistor and a capacitor, and adoption of the RC filter circuit further reduces the complexity of the liquid leakage detection circuit.

In some embodiments of the present application, as shown in FIG. 10, the excitation source circuit 120 may include a transistor 121, a second resistor 122, and a third unidirectional conduction module 123.

A control end of the transistor 121 is connected to the output end of the sampling circuit 110, a first end of the transistor 121 is connected to a first end of the second resistor 122 and the signal detection circuit 130, separately, and a second end of the transistor 121 is grounded.

The first end of the second resistor 122 is further connected to the signal detection circuit 130, and a second end of the second resistor 122 is connected to a first end of the third unidirectional conduction module 123.

A second end of the third unidirectional conduction module 123 is connected to the power supply.

Here, the excitation signal may be a PWM signal. The transistor may include, but is not limited to, a triode or a field-effect transistor. The third unidirectional conduction module 123 may be a third diode.

Illustratively, the triode may be an NPN triode. The field-effect transistor may be a metal-oxide-semiconductor field-effect transistor (MOS).

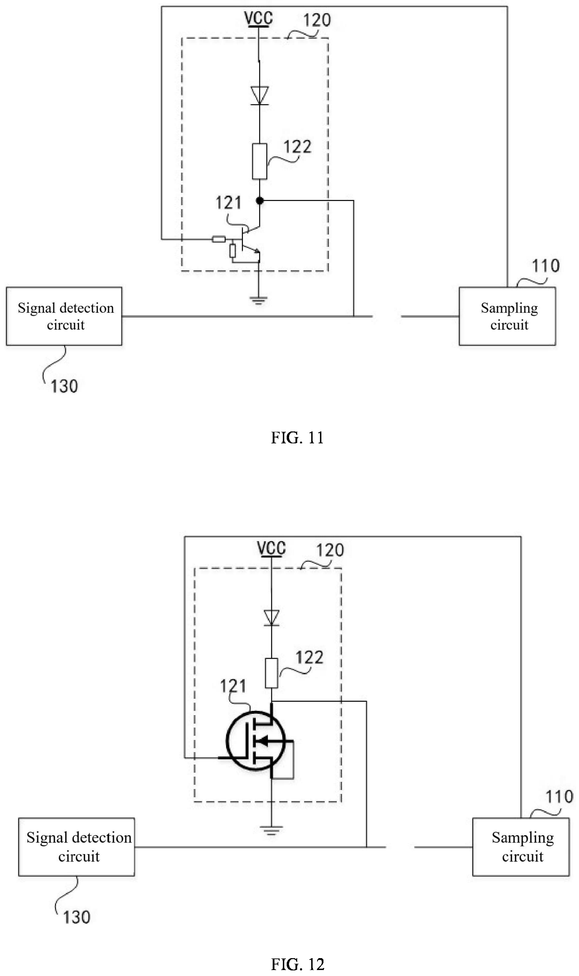

Specifically, if the transistor 121 is an NPN-type triode, the excitation source circuit 120 may be as shown in FIG. 11. A base of the transistor 121 is connected to the output end of the sampling circuit 110, a collector of the transistor 121 is connected to the first end of the second resistor 122 and the signal detection circuit 130, separately, and an emitter of the transistor 121 is grounded.

If the transistor 121 is an MOS transistor, the excitation source circuit 120 may be as shown in FIG. 12. A gate of the transistor 121 is connected to the output end of the sampling circuit 110, a drain of the transistor 121 is connected to the first end of the second resistor 122 and the signal detection circuit 130, separately, and a source of the transistor 121 is grounded.

In this way, a periodic excitation signal may be generated through the excitation source circuit, such that the signal detection circuit can periodically collect the liquid leakage state signal of the battery pack, thereby periodically detecting whether the battery pack has liquid leakage.

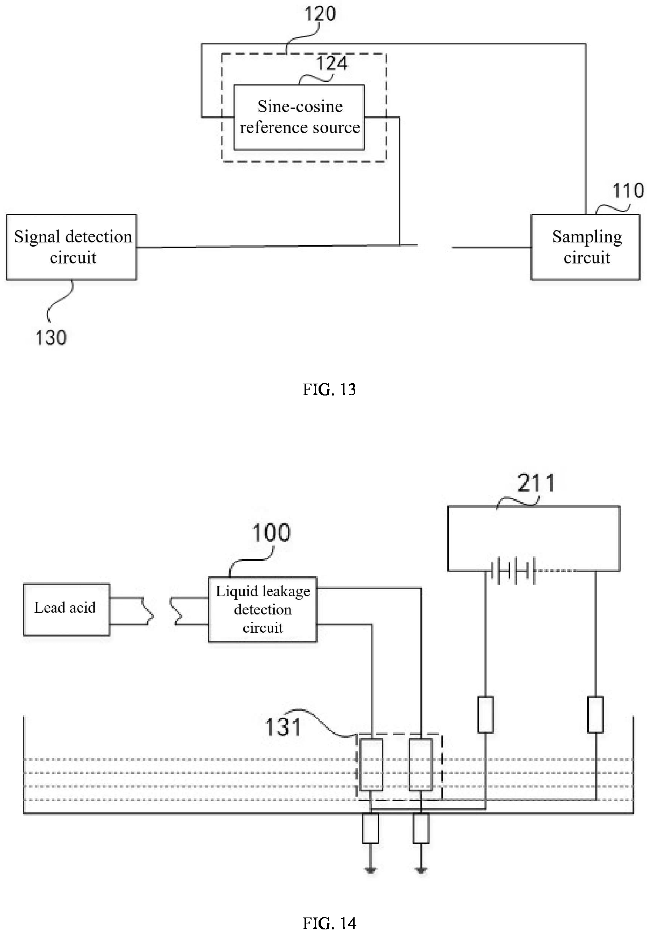

In some embodiments of the present application, as shown in FIG. 13, the excitation source circuit 120 may include a sine-cosine reference source 124.

An input end of the sine-cosine reference source 124 is connected to the output end of the sampling circuit 110, and an output end of the sine-cosine reference source 124 is connected to the signal detection circuit 130.

Here, the excitation signal may be a sine-cosine signal.

Specifically, the sine-cosine reference source 124 may receive the control signal sent by the sampling circuit 110, generate the excitation signal based on the control signal, and send the excitation signal to the signal detection circuit 130.

In this way, a periodic excitation signal may be generated through the sine-cosine reference source, such that the signal detection circuit can periodically collect the liquid leakage state signal of the battery pack, thereby periodically detecting whether the battery pack has liquid leakage.

Based on the above embodiments, as shown in FIG. 14, when the battery pack has liquid leakage, the insulating property of the battery pack is reduced, and a high voltage of a high-voltage system 211 in the battery pack is injected into the liquid leakage detection circuit 100 through the signal detection end 131, causing circuit damage, so that whether the battery pack has liquid leakage cannot be determined, resulting in that a battery management system (BMS) cannot take safety measures in time to prevent the occurrence of events such as battery pack fire and insulation abnormalities.

The high-voltage system 211 may be a high-voltage battery.

It should be noted that, for convenience of explanation, the signal detection end 131 is not included in the liquid leakage detection circuit 100 in FIG. 14, and the signal detection end 131 is substantially included in the liquid leakage detection circuit 100.

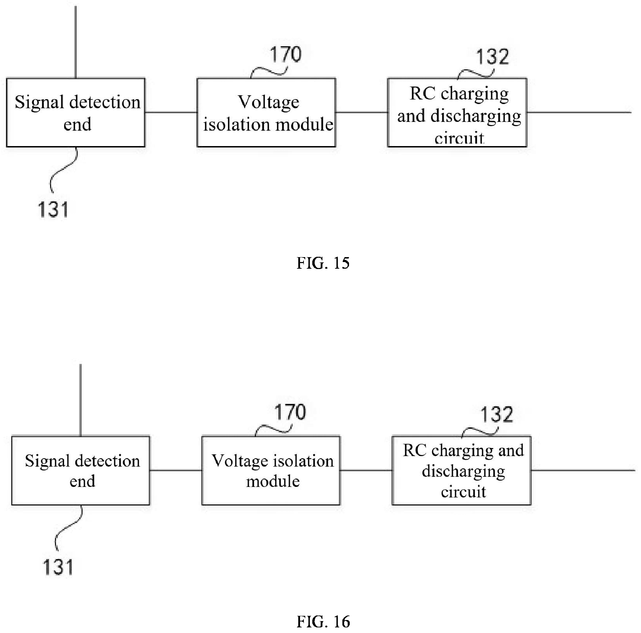

Based on this, in some embodiments of the present application, as shown in FIG. 15, the liquid leakage detection circuit 100 may further include a voltage isolation module 170.

An input end of the voltage isolation module 170 is connected to the signal detection end 131, and an output end of the voltage isolation module 170 is connected to the input end of the RC charging and discharging circuit 132.

Here, the voltage isolation module 170 may be connected in series between the signal detection end 131 and the RC charging and discharging circuit 132.

The voltage isolation module 170 may isolate the high voltage of the high-voltage system 211 in the battery pack to prevent the high voltage from being injected into the liquid leakage detection circuit 100.

In this way, by connecting the voltage isolation module in series between the signal detection end and the resistance-capacitance (RC) charging and discharging circuit, when the battery pack has liquid leakage, the situation that a high voltage of a high-voltage system is injected into the liquid leakage detection circuit through the signal detection end may be improved. This reduces the possibility of causing circuit damage, and enables the liquid leakage detection circuit to normally determine whether the battery pack has liquid leakage, thereby facilitating a battery management system (BMS) to be capable of finding and taking corresponding measures in time when the battery pack has liquid leakage, improving the reliability of the battery pack.

In some embodiments of the present application, as shown in FIG. 16, the voltage isolation module 170 may include a first capacitor 171.

A first end of the first capacitor 171 is connected to the signal detection end 131, and a second end of the first capacitor 171 is connected to the input end of the RC charging and discharging circuit 132.

Herein, because the high voltage of the high-voltage system 211 in the battery pack 200 is generally a direct current signal, and the capacitor has a characteristic of conducting an alternating current and blocking a direct current, the high voltage of the high-voltage system 211 in the battery pack 200 may be isolated through the capacitor. Therefore, the voltage isolation module 170 may include the first capacitor 171.

The quantity of the first capacitors 171 may be one or more. The first capacitor 171 may be a high-withstand-voltage isolation capacitor, and a withstand voltage value may be not less than an entire battery pack voltage or a surge voltage.

Specifically, the first capacitor 171 may be connected in series between the signal detection end 131 and the RC charging and discharging circuit 132.

The excitation signal generated by the excitation source circuit 120 may charge or discharge the first capacitor 171.

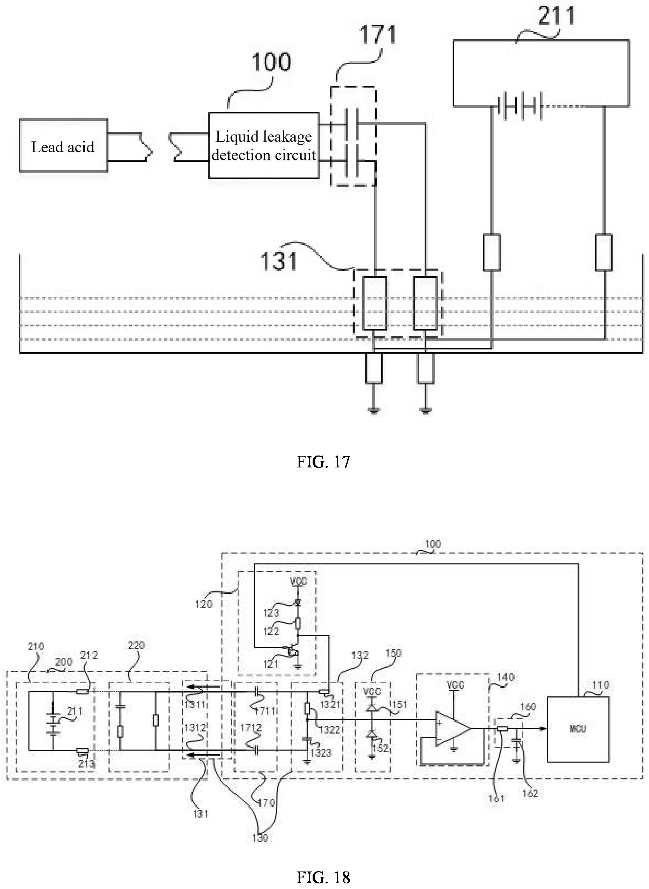

Illustratively, as shown in FIG. 17, the first capacitor 171 may be connected in series between the signal detection end 131 and the liquid leakage detection circuit 100 shown in FIG. 14.

It should be noted that, for convenience of explanation, the signal detection end 131 is not included in the liquid leakage detection circuit 100 in FIG. 17, and the signal detection end 131 is substantially included in the liquid leakage detection circuit 100.

In this way, isolating the high voltage of the high-voltage system in the battery pack through a simple capacitor may reduce the complexity of the liquid leakage detection circuit.

Based on the above embodiments, the following gives some specific examples with reference to FIG. 18 to describe the entire solution more clearly.

FIG. 18 is a schematic structural diagram of a liquid leakage detection circuit according to some embodiments of the present application.

As shown in FIG. 18, the liquid leakage detection circuit 100 may include: the sampling circuit 110, the excitation source circuit 120, the signal detection circuit 130, the follower 140, the clamp protection circuit 150, the filter circuit 160, and the voltage isolation module 170.

The sampling circuit 110 may be an MCU. The filter circuit 160 may include the first resistor 161 and the second capacitor 162. The excitation source circuit 120 may include the transistor 121, the second resistor 122, and the third unidirectional conduction module 123. The signal detection circuit 130 may include the signal detection end 131 and the RC charging and discharging circuit 132. The signal detection end 131 may include a first sub-signal detection end 1311 and a second sub-signal detection end 1312. The RC charging and discharging circuit 132 may include the third resistor 1321, the fourth resistor 1322, and the third capacitor 1323. The clamp protection circuit 150 may include the first unidirectional conduction module 151 and the second unidirectional conduction module 152. The voltage isolation module 170 may include the first capacitor 171, and the first capacitor 171 may include a fourth capacitor 1711 and a fifth capacitor 1712.

In addition, FIG. 18 further shows a battery pack 200. The battery pack 200 may be a battery pack equivalent circuit. The battery pack equivalent circuit 200 may include a high-and-low-voltage system equivalent circuit 210 and a coolant equivalent circuit 220. The high-and-low-voltage system equivalent circuit 210 includes a high-voltage system 211, a first equivalent insulation resistor 212, and a second equivalent insulation resistor 213.

Specifically, an output end of an MCU 110 is connected to the base of the transistor 121, the collector of the transistor 121 is grounded, the emitter of the transistor 121 is connected to the first end of the second resistor 122, the second end of the second resistor 122 is connected to the cathode of the third unidirectional conduction module 123, the anode of the third unidirectional conduction module 123 is connected to a power supply VCC, the first end of the third resistor 1321 is connected to the emitter of the transistor 121 and the first end of the second resistor 122, the second end of the second resistor 122 is connected to a first end of the fourth capacitor 1711 and the first end of the fourth resistor 1322, separately, the first end of the fourth resistor 1322 is further connected to the first end of the fourth capacitor 1711, the second end of the fourth resistor 1322 is connected to the first end of the third capacitor 1323, the second end of the third capacitor 1323 is connected to a first end of the fifth capacitor 1712 and is grounded, a second end of the fourth capacitor 1711 is connected to the first sub-signal detection end 1311, and a second end of the fifth capacitor 1712 is connected to the second sub-signal detection end 1312. The first sub-signal detection end 1311 and the second sub-signal detection end 1312 are located in the battery pack 200. A cathode of the first unidirectional conduction module 151 is connected to the power supply VCC, an anode of the first unidirectional conduction module 151 is connected to the input end of the follower 140 and a cathode of the second unidirectional conduction module 152, separately, and is further connected to a connecting line between the fourth resistor 1322 and the third capacitor 1323, an anode of the second unidirectional conduction module 152 is grounded, the cathode of the second unidirectional conduction module 152 is connected to the input end of the follower 140 and the anode of the first unidirectional conduction module 151, separately, and is further connected to the connecting line between the fourth resistor 1322 and the third capacitor 1323, the output end of the follower 140 is connected to the first end of the first resistor 161, and the second end of the first resistor 161 is connected to the first end of the second capacitor 162 and the MCU 110, separately.

To problems of compatible power supply distribution and inconsistent power supply amplitudes, a power supply VCC of the coolant equivalent circuit 220 may have an inconsistent power supply amplitude with power supplies VCC of the clamp protection circuit 150 and the sampling circuit 110.

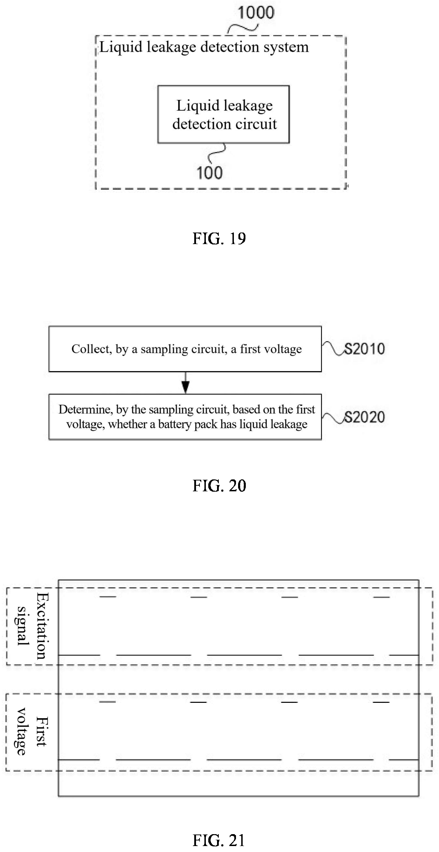

FIG. 19 is a schematic structural diagram of a liquid leakage detection system according to some embodiments of the present application.

As shown in FIG. 19, the liquid leakage detection system 1000 may include: the liquid leakage detection circuit 100.

The liquid leakage detection circuit 100 may be the liquid leakage detection circuit 100 according to any one of the above embodiments.

Thus, the liquid leakage detection system includes the liquid leakage detection circuit. In the liquid leakage detection circuit, by disposing the sampling circuit to send the control signal to the excitation source circuit, the excitation source circuit is enabled to generate the excitation signal based on the control signal and send the excitation signal to the signal detection circuit. The sampling circuit then collects the liquid leakage state signal of the battery pack in the signal detection circuit, thereby realizing the detection of whether the battery pack has liquid leakage.

Some embodiments of the present application further provide a battery management system. The battery management system may include the liquid leakage detection circuit 100 according to any one of the above embodiments.

FIG. 20 is a schematic flowchart of a liquid leakage detection method according to some embodiments of the present application.

As shown in FIG. 20, the liquid leakage detection method may be applied to the liquid leakage detection circuit 100 according to any one of the above embodiments, and the liquid leakage detection method may include the following steps:
S2010, collecting, by a sampling circuit, a first voltage; and
S2020, determining, by the sampling circuit, based on the first voltage, whether a battery pack has liquid leakage.

Thus, the liquid leakage detection circuit may collect the first voltage through the sampling circuit, and determine whether the battery pack has liquid leakage based on the first voltage, and therefore may realize the liquid leakage detection of the battery pack.

In some embodiments of the present application, S2020 may include:
determining, by the sampling circuit, that the battery pack does not have the liquid leakage in the case that the first voltage is greater than a first voltage threshold; and
determining, by the sampling circuit, that the battery pack has liquid leakage in the case that the first voltage satisfies a first preset condition.

Herein, the first preset condition may be that the first voltage is greater than a second voltage threshold and less than the first voltage threshold, where the second voltage threshold is less than the first voltage threshold.

Both the first voltage threshold and the second voltage threshold may be set according to actual needs.

In this way, whether the battery pack has liquid leakage may be determined accurately based on the first voltage, the first voltage threshold, and the first preset condition.

In some embodiments of the present application, S2010 may include:
collecting, by the sampling circuit, N first voltages in a single detection cycle;
the above determining, by the sampling circuit, that the battery pack does not have the liquid leakage in the case that the first voltage is greater than the first voltage threshold may include:
determining, by the sampling circuit, that the battery pack does not have the liquid leakage in the case that the quantity of voltages greater than the first voltage threshold in the N first voltages exceeds P; and
the above determining, by the sampling circuit, that the battery pack has the liquid leakage in the case that the first voltage satisfies a first preset condition may include:
determining, by the sampling circuit, that the battery pack has the liquid leakage in the case that the quantity of voltages satisfying the first preset condition in the N first voltages exceeds Q.

N, P, and Q are all positive integers, and may be set according to actual needs.

Herein, the MCU may output a control signal with a fixed period T and a fixed duty cycle D to control the excitation source circuit to generate the excitation signal, where an amplitude of the excitation signal may be VCC. A sampling cycle of the MCU may be t. The excitation signal may be a PWM signal.

N may be a quotient of a detection cycle M and the sampling cycle t of the liquid leakage detection circuit.

T, N, P and Q may all be manually set and modified according to a liquid level model and specific parameters of devices in the liquid leakage detection circuit.

In some examples, the MCU outputs a fixed frequency of 10 hz, a duty cycle of a PWM high level at an MCU end is 94%, the period is 100 ms, and a power supply of a power supply VCC of the excitation source circuit is 5 V. A voltage of each pulse is checked back to obtain the N first voltages.

If the detection cycle M = 5 S, there are 50 times of 100 ms in 5 S, and a maximum of 50 first voltages can be collected. To reserve a margin, P = 40 may be set.

In each detection cycle, if the cumulative number of sampling times where the first voltage is more than 4.5 V is greater than 40, it may be determined that the battery pack does not have liquid leakage.

In each detection cycle, if the cumulative number of sampling times where the detection level is within (1, 4.5) V is greater than 40 and the cumulative number of sampling times in the case that the detection level is within [4.5, 5] V is less than 10, it may be determined that the battery pack has liquid leakage.

In addition, if the N first voltages do not satisfy a fourth preset condition, a detection result in a previous detection cycle may be retained. The fourth preset condition may be: the quantity of voltages lower than the first voltage threshold in the N first voltages exceeds P; or the quantity of voltages satisfying the first preset condition in the N first voltages exceeds Q.

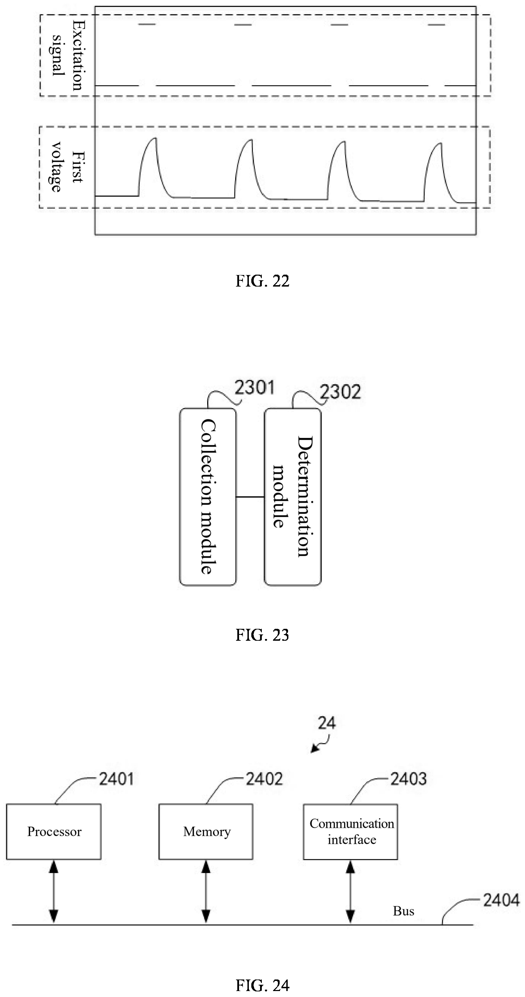

Illustratively, waveforms of the excitation signal may be as shown in FIGs. 21 and 22. In the case that the battery pack does not have liquid leakage, a waveform of the first voltage may be as shown in FIG. 21. There is no obvious RC charging and discharging process, RC charging and discharging time is short, the waveform is approximately a rectangular wave, and a high-level amplitude is approximate to the power supply VCC of the excitation source circuit. In the case that the battery pack has liquid leakage, a waveform of the first voltage may be as shown in FIG. 22. There is an obvious RC charging and discharging process, RC charging and discharging time is long, the waveform is approximately a sawtooth wave, and a maximum value is far less than the power supply VCC of the excitation source circuit.

In this way, whether the battery pack has liquid leakage may be determined more accurately based on a plurality of first voltages in the single detection cycle.

In some embodiments of the present application, before S2020, the method may further include:
determining, by the sampling circuit, based on the first voltage, that the liquid leakage detection circuit does not malfunction.

Here, before determining whether the battery pack has liquid leakage, it may be determined whether the liquid leakage detection circuit malfunctions. If the liquid leakage detection circuit does not malfunction, it may be determined whether the battery pack has liquid leakage based on the first voltage.

In this way, by predetermining whether the liquid leakage detection circuit malfunctions, the possibility of inaccurate liquid leakage detection results caused by malfunction of the liquid leakage detection circuit may be reduced, and the accuracy of liquid leakage detection may be improved.

In some embodiments of the present application, the above determining, by the sampling circuit, based on the first voltage, that the liquid leakage detection circuit does not malfunction may include:
determining, by the sampling circuit, that the liquid leakage detection circuit does not malfunction in the case that the first voltage does not satisfy a second preset condition.

The second preset condition may include:
the first voltage being less than the second voltage threshold; and
the first voltage being greater than the first voltage threshold.

Specifically, in the case that the first voltage does not satisfy the second preset condition, it indicates that the liquid leakage detection circuit does not malfunction or any malfunction is self-recoverable. In either case, the liquid leakage detection circuit may be considered free of malfunctions, and liquid leakage detection may be started.

In addition, in the case that the first voltage satisfies any one of items of the second preset condition, it is determined that the liquid leakage detection circuit malfunctions.

In this way, whether the liquid leakage detection circuit malfunctions is detected based on the first voltage cycle, so that whether the liquid leakage detection circuit malfunctions may be determined accurately and timely.

In some embodiments of the present application, the above determining, by the sampling circuit, based on the first voltage, that the liquid leakage detection circuit does not malfunction may include:
determining, by the sampling circuit, that the liquid leakage detection circuit does not malfunction in the case that the N first voltages do not satisfy a third preset condition.

The third preset condition may include:
the N first voltages being all less than the second voltage threshold; and
the N first voltages being all greater than the first voltage threshold.

Specifically, in the case that none of the N first voltages satisfies the third preset condition, it indicates that the liquid leakage detection circuit does not malfunction or any malfunction is self-recoverable. In either case, the liquid leakage detection circuit may be considered free of malfunctions, and liquid leakage detection may be started.

In addition, in the case that the N first voltages satisfy any one of items of the third preset condition, it is determined that the liquid leakage detection circuit malfunctions.

Illustratively, if the first voltage is continuously less than 1 V for 200 times, it may be determined that the liquid leakage detection current malfunctions. If the first voltage is continuously greater than 4.5 V for 200 times, it is determined that the liquid leakage detection current malfunctions. If the first voltage does not satisfy the above two conditions, it may indicate that the liquid leakage detection circuit does not malfunction or any malfunction is self-recoverable. In either case, the liquid leakage detection circuit may be considered free of malfunctions, and liquid leakage detection may be started.

In this way, whether the liquid leakage detection circuit malfunctions may be determined more accurately based on the plurality of first voltages in the single detection cycle.

In addition, if the excitation signal is a sine-cosine signal, whether the battery pack has liquid leakage may be determined based on an amplitude and a phase difference of the first voltage.

Based on the same inventive concept, an embodiment of the present application further provides a liquid leakage detection apparatus. The liquid leakage detection apparatus according to the embodiment of the present application will be described in detail below with reference to FIG. 23.

FIG. 23 shows a schematic structural diagram of a liquid leakage detection apparatus according to an embodiment of the present application.

As shown in FIG. 23, the liquid leakage detection apparatus may be applied to the liquid leakage detection circuit 100 according to any one of the above embodiments, and the liquid leakage detection apparatus may include:
a collection module 2301, configured to collect, by the sampling circuit, the first voltage; and
a determination module 2302, configured to determine, by the sampling circuit, based on the first voltage, whether the battery pack has liquid leakage.

Thus, the liquid leakage detection circuit may collect the first voltage through the sampling circuit, and determine whether the battery pack has liquid leakage based on the first voltage, and therefore may realize the liquid leakage detection of the battery pack.

In some embodiments of the present application, the determination module 2302 may include:
a first determination submodule, configured to determine, by the sampling circuit, that the battery pack does not have the liquid leakage in the case that the first voltage is greater than a first voltage threshold; and
a second determination submodule, configured to determine, by the sampling circuit, that the battery pack has the liquid leakage in the case that the first voltage satisfies a first preset condition.

In some embodiments of the present application, the collection module 2301 may be specifically configured to:
collect, by the sampling circuit, N first voltages in a single detection cycle;
the first determination submodule may be specifically configured to:
   determine, by the sampling circuit, that the battery pack does not have the liquid leakage in the case that the quantity of voltages greater than the first voltage threshold in the N first voltages exceeds P; and
   the second determination submodule may be specifically configured to:
      determine, by the sampling circuit, that the battery pack has the liquid leakage in the case that the quantity of voltages satisfying the first preset condition in the N first voltages exceeds Q;
      where the first preset condition is that the first voltage is greater than a second voltage threshold and less than the first voltage threshold, the second voltage threshold is less than the first voltage threshold, and N, P, and Q are all positive integers.

In some embodiments of the present application, the apparatus may further include:
a malfunction diagnosis module, configured to determine, by the sampling circuit, based on the first voltage, that the liquid leakage detection circuit does not malfunction, before determining, by the sampling circuit, based on the first voltage, whether the battery pack has the liquid leakage.

In some embodiments of the present application, the malfunction diagnosis module may be specifically configured to:
determine, by the sampling circuit, that the liquid leakage detection circuit does not malfunction in the case that the first voltage does not satisfy a second preset condition;
where the second preset condition includes:
   the first voltage being less than the second voltage threshold; and
   the first voltage being greater than the first voltage threshold.

In some embodiments of the present application, the malfunction diagnosis module may be specifically configured to:
determine, by the sampling circuit, that the liquid leakage detection circuit does not malfunction in the case that the N first voltages do not satisfy a third preset condition;
where the third preset condition includes:
   the N first voltages being all less than the second voltage threshold; and
   the N first voltages being all greater than the first voltage threshold.

FIG. 24 is a schematic structural diagram of an electronic device according to an embodiment of the present application.

As shown in FIG. 24, the electronic device 24 can implement a structural diagram of an exemplary hardware architecture of an electronic device in the liquid leakage detection method and the liquid leakage detection apparatus according to the embodiments of the present application. The electronic device may refer to the electronic device in the embodiments of the present application.

The electronic device 24 may include a processor 2401 and a memory 2402 storing a computer program instruction.

Specifically, the above processor 2401 may include a central processing unit (CPU) or an application-specific integrated circuit (ASIC), or may be configured as one or more integrated circuits implementing the embodiments of the present application.

The memory 2402 may include a mass storage for data or instructions. By way of example and not limitation, the memory 2402 may include a hard disk drive (HDD), a floppy disk drive, a flash memory, an optical disk, a magneto-optical disk, a magnetic tape, a universal serial bus (USB) drive, or a combination of two or more of the foregoing. Where appropriate, the memory 2402 may include a removable or non-removable (or fixed) medium. Where appropriate, the memory 2402 may be inside or outside an integrated gateway disaster recovery device. In particular embodiments, the memory 2402 is a non-volatile solid-state memory. In particular embodiments, the memory 2402 may include a read-only memory (ROM), a random-access memory (RAM), a magnetic disk storage medium device, an optical storage medium device, a flash memory device, and an electrical, an optical, or another physical/tangible memory storage device. Thus, in general, the memory 2402 includes one or more tangible (non-transitory) computer-readable storage media (e.g., memory devices) encoded with software including computer-executable instructions, and the software, when executed (e.g., by one or more processors), is operable to perform an operation described with reference to the method according to an aspect of the present application.

The processor 2401 implements any one of the liquid leakage detection methods in the above embodiments by reading and executing the computer program instruction stored in the memory 2402.

In an example, the electronic device may further include a communication interface 2403 and a bus 2404. As shown in FIG. 24, the processor 2401, the memory 2402, and the communication interface 2403 are connected and communicate with each other through the bus 2404.

The communication interface 2403 is mainly configured to implement communications among various modules, apparatuses, units, and/or devices in the embodiments of the present application.

The bus 2404 includes hardware, software, or both, and couples components of the electronic device to each other. By way of example and not limitation, the bus may include an accelerated graphics port (AGP) or another graphics bus, an enhanced industry standard architecture (EISA) bus, a front-side bus (FSB), a hyper transport (HT) interconnect, an industry standard architecture (ISA) bus, an infinite bandwidth interconnect, a low pin count (LPC) bus, a memory bus, a micro channel architecture (MCA) bus, a peripheral component interconnect (PCI) bus, a PCI-Express (PCI-X) bus, a serial advanced technology attachment (SATA) bus, a video electronics standards association local (VLB) bus, or another suitable bus, or a combination of two or more of the foregoing. Where appropriate, the bus 2404 may include one or more buses. Although a particular bus is described and illustrated in the embodiments of the present application, the present application contemplates any suitable bus or interconnect.

The electronic device may perform the liquid leakage detection method in the embodiments of the present application, thereby implementing the liquid leakage detection method and apparatus described with reference to FIGs. 20 to 23.

In addition, with reference to the liquid leakage detection method in the above embodiments, an embodiment of the present application may provide a computer storage medium for implementation. The computer storage medium stores a computer program instruction. The computer program instruction, when executed by a processor, implements any one of the liquid leakage detection methods in the above embodiments.

It should be noted that the present application is not limited to the specific configurations and processes described above and illustrated in the drawings. Detailed descriptions of known methods are omitted herein for brevity. In the above embodiments, several specific steps are described and illustrated as examples. However, the method process of the present application is not limited to the specific steps described and shown, and those skilled in the art may make various changes, modifications, and additions, or change the order between the steps after understanding the spirit of the present application.

The functional blocks shown in the structural block diagrams described above may be implemented as hardware, software, firmware, or a combination thereof. When implemented in hardware, it may be, for example, an electronic circuit, an application-specific integrated circuit (ASIC), appropriate firmware, a plug-in, a function card, or the like. When implemented in software, the elements of the present application are programs or code segments used to perform required tasks. The program or code segments may be stored in a machine-readable medium or transmitted over a transmission medium or communication link via a data signal carried in a carrier wave. A "machine-readable medium" may include any medium capable of storing or transmitting information. Examples of machine-readable media include electronic circuits, semiconductor memory devices, ROMs, flash memories, erasable ROMs (EROMs), floppy disks, compact disc ROMs (CD-ROMs), optical disks, hard disks, fiber optic media, radio frequency (RF) links, or the like. The code segments may be downloaded via a computer network such as the Internet, an intranet, or the like.

It should be further noted that, in the exemplary embodiments mentioned in the present application, some methods or systems are described based on a series of steps or apparatuses. However, the present application is not limited to a sequence of the above steps. In other words, the steps may be performed in the sequence mentioned in the embodiments, or may be performed in a sequence different from that in the embodiments, or several steps are performed simultaneously.

Aspects of the present application are described above with reference to flowchart illustrations and/or block diagrams of methods, apparatuses (systems) and computer program products according to the embodiments of the present application. It should be understood that each block of the flowcharts and/or block diagrams, and a combination of blocks in the flowcharts and/or block diagrams, may be implemented by computer program instructions. These computer program instructions may be provided to a processor of a general purpose computer, a special-purpose computer, or other programmable data processing apparatuses to produce a machine, such that the instructions executed via the processor of the computer or other programmable data processing apparatuses enable the implementation of the functions/actions specified in one or more blocks of the flowcharts and/or block diagrams. Such a processor may be, but is not limited to, a general-purpose processor, a dedicated processor, an application-specific processor, or a fieldprogrammable logic circuit. It may also be understood that each block in the block diagrams and/or flowcharts, and a combination of blocks in the block diagrams and/or flowcharts, may also be implemented by special-purpose hardware that performs the specified functions or actions, or by a combination of special-purpose hardware and computer instructions.

Although the present application has been described with reference to preferred embodiments, various modifications may be made and components herein may be replaced with equivalents without departing from the scope of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. A liquid leakage detection circuit, comprising:
a sampling circuit, wherein an output end of the sampling circuit is connected to an input end of an excitation source circuit, and is configured to send a control signal to the excitation source circuit; and
the excitation source circuit, wherein an output end of the excitation source circuit is connected to a signal detection circuit, and is configured to generate an excitation signal based on the control signal, and send the excitation signal to the signal detection circuit, and the excitation signal is a periodic pulse signal;
wherein the sampling circuit is further configured to collect a liquid leakage state signal of a battery pack in the signal detection circuit, and the liquid leakage state signal is generated in response to the excitation signal.

2. The liquid leakage detection circuit according to claim 1, wherein the signal detection circuit comprises:
a signal detection end, connected to the output end of the excitation source circuit and an input end of a resistance-capacitance charging and discharging circuit, separately, and configured to collect the liquid leakage state signal of the battery pack; and
the resistance-capacitance charging and discharging circuit, wherein an output end of the resistance-capacitance charging and discharging circuit is connected to an input end of the sampling circuit; and
the sampling circuit is configured to collect a first voltage between a capacitor and a resistor in the resistance-capacitance charging and discharging circuit.

3. The liquid leakage detection circuit according to claim 2, wherein the liquid leakage detection circuit further comprises:
a voltage isolation module, wherein an input end of the voltage isolation module is connected to the signal detection end, and an output end of the voltage isolation module is connected to the input end of the resistance-capacitance charging and discharging circuit.

4. The liquid leakage detection circuit according to claim 3, wherein the voltage isolation module comprises:
a first capacitor, wherein a first end of the first capacitor is connected to the signal detection end, and a second end of the first capacitor is connected to the input end of the resistance-capacitance charging and discharging circuit.

5. The liquid leakage detection circuit according to any one of claims 2 to 4, wherein the liquid leakage detection circuit further comprises:
a follower, wherein an input end of the follower is connected to the output end of the resistance-capacitance charging and discharging circuit, and an output end of the follower is connected to the input end of the sampling circuit.

6. The liquid leakage detection circuit according to claim 5, wherein the liquid leakage detection circuit further comprises:
a clamp protection circuit, wherein an input end of the clamp protection circuit is connected to the output end of the resistance-capacitance charging and discharging circuit, an output end of the clamp protection circuit is connected to the input end of the follower, and the clamp protection circuit is configured to clamp the first voltage within a preset voltage range.

7. The liquid leakage detection circuit according to claim 6, wherein the clamp protection circuit comprises:
a first unidirectional conduction module, wherein a first end of the first unidirectional conduction module is connected to the output end of the resistance-capacitance charging and discharging circuit, the input end of the follower, and a first end of a second unidirectional conduction module, separately, and a second end of the first unidirectional conduction module is connected to a power supply, and is configured to be conducted toward a direction of the power supply in a case that the first voltage is greater than a voltage of the power supply; and
the second unidirectional conduction module, wherein the first end of the second unidirectional conduction module is further connected to the output end of the resistance-capacitance charging and discharging circuit and the input end of the follower, separately, and a second end of the second unidirectional conduction module is grounded, and is configured to be conducted toward a ground direction in a case that the first voltage is less than a ground voltage.

8. The liquid leakage detection circuit according to any one of claims 5 to 7, wherein the liquid leakage detection circuit further comprises:
a filter circuit, wherein an input end of the filter circuit is connected to the output end of the follower, an output end of the filter circuit is connected to the input end of the sampling circuit, and the filter circuit is configured to filter out noise in the first voltage.

9. The liquid leakage detection circuit according to any one of claims 5 to 8, wherein the filter circuit comprises:
a first resistor, wherein a first end of the first resistor is connected to the output end of the follower, and a second end of the first resistor is connected to a first end of a second capacitor and the input end of the sampling circuit, separately; and
the second capacitor, wherein the first end of the second capacitor is further connected to the input end of the sampling circuit, and a second end of the second capacitor is grounded.

10. The liquid leakage detection circuit according to any one of claims 1 to 9, wherein the excitation source circuit comprises:
a transistor, wherein a control end of the transistor is connected to the output end of the sampling circuit, a first end of the transistor is connected to a first end of a second resistor and the signal detection circuit, separately, and a second end of the transistor is grounded;
the second resistor, wherein the first end of the second resistor is further connected to the signal detection circuit, and a second end of the second resistor is connected to a first end of a third unidirectional conduction module; and
the third unidirectional conduction module, wherein a second end of the third unidirectional conduction module is connected to the power supply.

11. The liquid leakage detection circuit according to any one of claims 1 to 10, wherein the excitation source circuit comprises:
a sine-cosine reference source, wherein an input end of the sine-cosine reference source is connected to the output end of the sampling circuit, and an output end of the sine-cosine reference source is connected to the signal detection circuit.

12. A liquid leakage detection system, comprising: the liquid leakage detection circuit according to any one of claims 1 to 11.

13. A battery management system, comprising the liquid leakage detection circuit according to any one of claims 1 to 11.

14. A liquid leakage detection method, applied to the liquid leakage detection circuit according to any one of claims 1 to 11, the method comprising:
collecting, by a sampling circuit, a first voltage; and
determining, by the sampling circuit, based on the first voltage, whether the battery pack has liquid leakage.

15. The method according to claim 14, wherein determining, by the sampling circuit, based on the first voltage, whether the battery pack has the liquid leakage comprises:
determining, by the sampling circuit, that the battery pack does not have the liquid leakage in a case that the first voltage is greater than a first voltage threshold; and
determining, by the sampling circuit, that the battery pack has the liquid leakage in a case that the first voltage satisfies a first preset condition.

16. The method according to claim 15, wherein collecting, by the sampling circuit, the first voltage comprises:
collecting, by the sampling circuit, N first voltages in a single detection cycle;
determining, by the sampling circuit, that the battery pack does not have the liquid leakage in the case that the first voltage is greater than the first voltage threshold comprises:
determining, by the sampling circuit, that the battery pack does not have the liquid leakage in a case that a quantity of voltages greater than the first voltage threshold in the N first voltages exceeds P; and
determining, by the sampling circuit, that the battery pack has the liquid leakage in the case that the first voltage satisfies the first preset condition comprises:
determining, by the sampling circuit, that the battery pack has the liquid leakage in a case that a quantity of voltages satisfying the first preset condition in the N first voltages exceeds Q;
wherein the first preset condition is that the first voltage is greater than a second voltage threshold and less than the first voltage threshold, the second voltage threshold is less than the first voltage threshold, and N, P, and Q are all positive integers.

17. The method according to claim 16, wherein before determining, by the sampling circuit, based on the first voltage, whether the battery pack has the liquid leakage, the method further comprises:
determining, by the sampling circuit, based on the first voltage, that the liquid leakage detection circuit does not malfunction.

18. The method according to claim 17, wherein determining, by the sampling circuit, based on the first voltage, that the liquid leakage detection circuit does not malfunction comprises:
determining, by the sampling circuit, that the liquid leakage detection circuit does not malfunction in a case that the first voltage does not satisfy a second preset condition;
wherein the second preset condition comprises:
the first voltage being less than the second voltage threshold; and
the first voltage being greater than the first voltage threshold.

19. The method according to claim 17, wherein determining, by the sampling circuit, based on the first voltage, that the liquid leakage detection circuit does not malfunction comprises:
determining, by the sampling circuit, that the liquid leakage detection circuit does not malfunction in a case that the N first voltages do not satisfy a third preset condition;
wherein the third preset condition comprises:
the N first voltages being all less than the second voltage threshold; and
the N first voltages being all greater than a first voltage threshold.

20. A liquid leakage detection apparatus, applied to the liquid leakage detection circuit according to any one of claims 1 to 11, the apparatus comprising:
a collection module, configured to collect, by the sampling circuit, the first voltage; and
a determination module, configured to determine, by the sampling circuit, based on the first voltage, whether the battery pack has liquid leakage.

21. An electronic device, comprising: a processor and a memory storing a computer program instruction;
wherein the processor, when executing the computer program instruction, implements the liquid leakage detection method according to any one of claims 14 to 19.
